(19) Europäisches Patentamt
European Patent Office
Office européen des brevets

(11) EP 1 290 845 B1

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.$^7$: **H04L 27/26**

(21) Anmeldenummer: 01942969.5

(22) Anmeldetag: **26.04.2001**

(86) Internationale Anmeldenummer:
**PCT/DE2001/001569**

(87) Internationale Veröffentlichungsnummer:
**WO 2001/091393 (29.11.2001 Gazette 2001/48)**

(54) **VERFAHREN ZUR SYNCHRONISATION VON OFDM-SYMBOLEN BEI RUNDFUNKÜBERTRAGUNGEN**

METHOD FOR SYNCHRONISING OFDM SYMBOLS DURING RADIO TRANSMISSIONS

PROCEDE DE SYNCHRONISATION DE SYMBOLES DE MULTIPLEXAGE FREQUENTIEL OPTIQUE LORS D'EMISSIONS RADIO

(84) Benannte Vertragsstaaten:
**DE FR GB IT**

(30) Priorität: **26.05.2000 DE 10026325**

(43) Veröffentlichungstag der Anmeldung:
**12.03.2003 Patentblatt 2003/11**

(73) Patentinhaber: **ROBERT BOSCH GMBH**
**70442 Stuttgart (DE)**

(72) Erfinder:
• SCHAEFER, Wolfgang
  31141 Hildesheim (DE)
• HANSEN, Christian
  30171 Hannover (DE)

(56) Entgegenhaltungen:
FR-A- 2 758 031        US-A- 5 627 863

## Beschreibung

### Stand der Technik

Die Erfindung geht aus von einem Verfahren zur Synchronisation von OFDM-Symbolen bei Rundfunkübertragungen nach der Gattung des unabhängigen Patentanspruchs.

Es ist bereits bekannt, dass bei digitalen Rundfunkübertragungsverfahren wie DAB (Digital Audio Broadcasting) und DVB-T (Digital Video Broadcasting Terrestrisch) eine Frequenz- und Rahmensynchronisation durchgeführt wird, um im Empfänger den Rahmenanfang bei der richtigen Frequenz zu finden. Bei DAB wird dabei ein ganzes OFDM (Orthogonal Frequency Division Multiplex = Orthogonaler Frequenzmultiplex)-Symbol für die Synchronisation verwendet, während bei DVB-T kontinuierliche Pilotträger eingesetzt werden.

Aus FR-A-2758031 ist eine Zeitsynchronisation bei einem OFDM-Übertragungssystem bekannt, bei dem die Phasendifferenz aus den Trägern zweier aufeinanderfolgenden Symbole mit dem gleichen Subträgerindex gebildet wird. Eine Synchronisationsantwort wird auf sechzehn aufeinanderfolgenden Symbolen übertragen. Aus US-A-5,627,863 ist eine Rahmensynchronisation mit einer Synchronisierungssequenz bekannt, die periodisch in den Datenfluss eines Mehrtonübertragungsverfahrens eingefügt wird.

### Vorteile der Erfindung

Das erfindungsgemäße Verfahren zur Synchronisation von OFDM-Symbolen bei Rundfunkübertragungen mit den Merkmalen des unabhängigen Patentanspruchs hat demgegenüber den Vorteil, dass das OFDM-Symbol, das die Pilotenpaare für die Rahmen- und Frequenzsynchronisation aufweist, auch Nutzdaten aufweist, so dass nicht ein ganzes OFDM-Symbol nur für die Synchronisation verbraucht wird. Dies ist insbesondere bei digitalen Rundfunkübertragungen von Vorteil, die im Bereich der Kurzwelle und Mittelwelle sowie Langwelle vorgesehen sind, die unter dem Namen DRM (Digital Radio Mondial) bekannt sind. Hier muß besonders sparsam mit Bandbreite umgegangen werden.

Weiterhin ist es von Vorteil, dass die Pilotenpaare über die verfügbare Kanalbandbreite eines OFDM-Symbols verteilt werden können, so dass der Einfluß des frequenzselektiven Schwunds auf diese Pilotenpaare minimiert ist. Bei DRM wird aus mehreren Gründen nur eine eingeschränkte Bandbreite von 3 kHz von insgesamt 10 kHz genutzt.

Durch die in den abhängigen Ansprüchen aufgeführten Maßnahmen und Weiterbildungen sind vorteilhafte Verbesserungen des im unabhängigen Patentanspruch angegebenen Verfahrens zur Synchronisation von OFDM-Symbolen bei Rundfunkübertragungen möglich.

Besonders vorteilhaft ist, dass die Sequenz sendeseitig den Piloten mittels einer differenziellen Modulation per Quadraturphasenumtastung oder binärer Phasenumtastung aufmoduliert wird. Diese Modulationsarten machen die Sequenz besonders robust gegenüber Rauschen und Kanalstörungen.

Zunächst wird eine grobe Zeitsynchronisation für die OFDM-Symbole mittels der Auswertung des Schutzintervalls durchgeführt. Aus der Phase der Korrelierten des Schutzintervalls kann die Frequenzablage, die nicht ganzzahlig ist, bestimmt werden, um dann die empfangenen OFDM-Symbole um diese nicht ganzzahlige Frequenzablage zu korrigieren. Diese OFDM-Symbolsynchronisation wird dabei vorteilhafterweise mittels Korrelation erreicht, die ein sehr einfaches und bekanntes Verfahren in der Signalverarbeitung ist.

Darüber hinaus ist es von Vorteil, dass die empfangene Sequenz, die den Pilotenpaaren aufmoduliert wurde, mit der bekannten und abgespeicherten Sendesequenz mittels Kreuzkorrelation verglichen wird. Dadurch wird ein Maß gewonnen, mittels dessen die ganzzahlige Frequenzablage bestimmt werden kann und auch die Rahmensynchronisation, da dadurch das erste OFDM-Symbol eines Rahmens identifiziert wird. Nur das erste OFDM-Symbol eines Rahmens weist die aufmodulierte Sequenz mit den Pilotenpaaren auf.

Weiterhin ist es von Vorteil, dass durch eine Mittelung der Rahmensynchronisationsergebnisse über Gruppen von OFDM-Symbolen eine Verbesserung der Rahmensynchronisation erreicht wird, da sich dadurch Fehler in der Rahmensynchronisationsbestimmung vorteilhafterweise ausgleichen können.

Schließlich ist es auch von Vorteil, dass ein Rundfunksender und ein Rundfunkempfänger vorgesehen sind, die die Durchführung des erfindungsgemäßen Verfahrens gestatten.

### Zeichnung

Ausführungsbeispiele der Erfindung sind in der Zeichnung dargestellt und werden in der nachfolgenden Beschreibung näher erläutert. Es zeigt Figur 1 ein Blockschaltbild des erfindungsgemäßen Verfahrens, Figur 2 ein Blockschaltbild des Gesamtübertragungssystems unter Verwendung des erfindungsgemäßen Verfahrens und Figur 3 eine Anordnung der Pilotenpaare im ersten OFDM-Symbol.

Beschreibung

Eine Grundanforderung an jedes Übertragungssystem ist eine schnelle Synchronisation auf einen eingehenden Datenstrom, so dass eine schnelle Weiterverarbeitung wie eine Audiowiedergabe von in empfangenen Rundfunksignalen enthaltenen Audiosignalen möglich ist. D.h., sowohl eine Frequenzsynchronisation als auch eine Zeitsynchronisation und dabei insbesondere eine Rahmensynchronisation, falls die Daten in Rahmen übertragen werden, sind vorzusehen. Dabei muß insbesondere eine Frequenzablage, d.h. eine Abweichung der Frequenz im Empfänger, die durch einen Festfrequenzoszillator erzeugt wird, von der vorgegebenen Frequenz kompensiert werden. Diese Abweichung stammt von Temperatureffekten der Oszillatoren und auch von der Alterung der Oszillatoren. Für die Rahmensynchronisation ist es dabei das Ziel, den Rahmenanfang zu finden.

Digitale Rundfunkübertragungen werden häufig mittels dem orthogonalen Frequenzmultiplex durchgeführt. Der orthogonale Frequenzmultiplex (OFDM = Orthogonal Frequency Division Multiplex) bedeutet, dass die zu übertragenden Daten auf viele nahe beieinander liegende Träger unterschiedlicher Frequenzen verteilt werden. Dabei sind die Träger derart gestaltet, dass sich die auf den Trägern verteilten Informationen gegenseitig nicht stören. Dieses Verhalten wird mit orthogonal beschrieben. Die Verwendung von OFDM führt insbesondere dazu, dass der bei Funkübertragungen bekannte frequenzselektive Schwund, also eine frequenzselektive Dämpfung, nicht die ganze Information, die übertragen werden soll, beeinflusst, sondern nur wenige Teile davon, so dass mittels Fehlerkorrekturverfahren, auch als Kanalcodierung bezeichnet, diese Störungen kompensiert werden können. Kanalcodierung bedeutet dabei, dass den zu übertragenden Daten Redundanz hinzugesetzt wird, aus der gegebenenfalls im Empfänger empfangene, verfälschte Daten rekonstruiert werden können.

DAB und DVB sind zwei bereits eingesetzte Rundfunkübertragungsverfahren, die OFDM nutzen. Auch DRM (Digital Radio Mondial) wird OFDM für die Übertragungen im Kurz-, Mittel- und Langwellenbereich verwenden. Bei DRM muß insbesondere wegen der schwierigen Wellenausbreitungsbedingungen und den niedrigen Sendefrequenzen auf eine große Robustheit der Synchronisation und auf eine optimale Effizienz der zu übertragenden Daten geachtet werden.

Erfindungsgemäß wird daher ein Verfahren zur Synchronisation von OFDM-Symbolen bei Rundfunkübertragungen verwendet, wobei in einem ersten OFDM-Symbol eines zu übertragenden Rahmens Piloten hinzugefügt werden, so dass sich mit den bereits vorliegenden Piloten Pilotenpaare ergeben. Den Pilotenpaaren wird erfindungsgemäß eine Sequenz aufmoduliert, die empfangsseitig aus den empfangenen Signalen extrahiert wird. Durch einen Vergleich insbesondere mittels Kreuzkorrelation von der empfangenen Sequenz und einer im Empfänger abgespeicherten Sequenz wird festgestellt, ob das erste OFDM-Symbol vorliegt oder nicht. Damit wird die Rahmensynchronisation erreicht. Aus dem Maß der Kreuzkorrelation wird weiterhin die ganzzahlige Frequenzablage bestimmt.

In einer ersten groben Zeitsynchronisation, die mittels der Auswertung des Schutzintervalls eines OFDM-Symbols erreicht wird, wird die nicht ganzzahlige Frequenzablage bestimmt, um diese dann an den empfangenen OFDM-Symbolen zu korrigieren. Weiterhin ist diese grobe Zeitsynchronisation notwendig, um das Fenster für die schnelle Fourier-Transformation optimal zu plazieren. Dies liegt insbesondere daran, dass die Daten zur Rahmensynchronisation in Form der Piloten vorliegen, und daher kann die Rahmensynchronisation erst nach dem OFDM-Demodulator, also der FFT (Fast Fourier Transform = schnelle Fouriertransformation) erfolgen. Deshalb ist dieses zweistufige Verfahren zur Zeit- und Frquenzsynchronisation notwendig.

Die den Pilotenpaaren aufmodulierte Sequenz wird mittels einer differenziellen Modulation also entweder Quadraturphasenumtastung (QPSK = Quadratur Phase Shift Keying) oder binäre Phasenumtastung (BPSK = Binary Phase Shift Keying) aufmoduliert. Dabei steckt nun die Information in der Änderung der Phase zwischen zwei aufeinanderfolgenden Pilotträgern. Dies führt zu einer sehr robusten Übertragung. Bei BPSK sind dies beispielsweise die Phasen 0 und 180° und bei QPSK sind es vier Phasen, die jeweils um 90° voneinander versetzt sind, das sind dann beispielsweise 45°, 135°, 225° und 315°.

Durch eine Mittelung der Rahmensynchronisationsergebnisse über mehrere Gruppen von OFDM-Symbolen, wobei die Gruppen eine Teilmenge von Rahmen sein können, wird eine Verbesserung der Rahmensynchronisationsergebnisse erreicht, da sich Abweichungen gegeneinander ausgleichen werden.

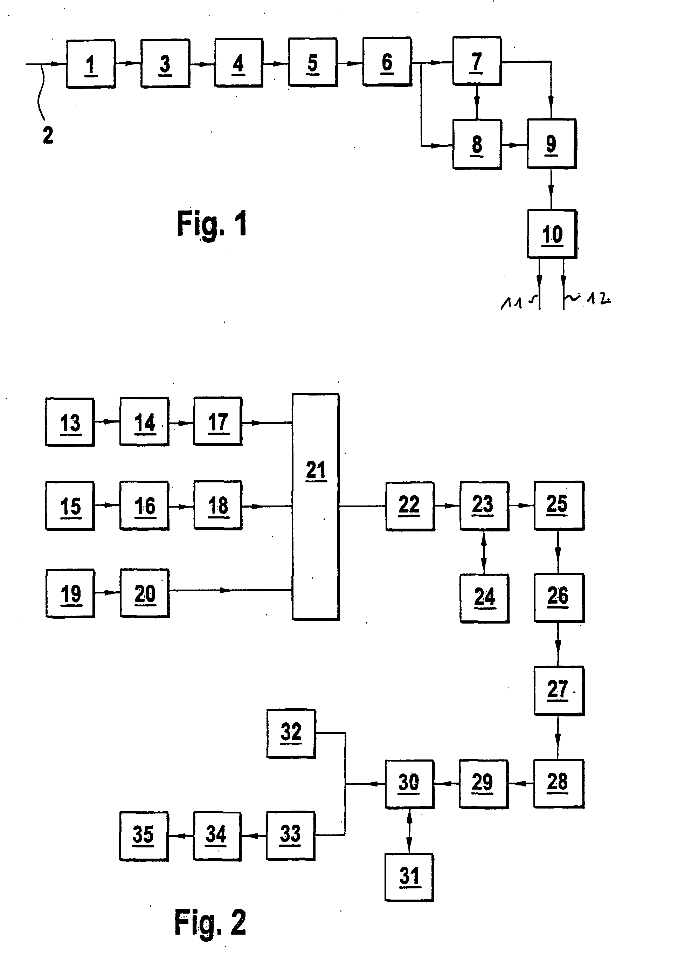

In Figur 1 ist das erfindungsgemäße Verfahren zur Synchronisation von OFDM-Symbolen bei Rundfunkübertragungen als Blockschaltbild dargestellt. Ein Datenstrom 2 gelangt in einen OFDM-Modulator 1, um wie oben dargestellt auf verschiedene nahe beieinander liegende Träger auf unterschiedlichen Frequenzen verteilt zu werden. Im Block 3 werden den OFDM-Daten Piloten hinzugefügt, wobei im ersten OFDM-Symbol eines Rahmens Pilotenpaare erzeugt werden. Im Block 4 werden die OFDM-Symbole mit den Piloten gesendet, um dann im Block 5 über den Funkkanal übertragen zu werden. Im Block 6 werden die OFDM-Symbole empfangen, um dann in Block 7 eine grobe Zeitsynchronisation mittels Korrelation des Schutzintervalls mit dem Symbolende durchzuführen. Diese Auswertung gelingt mittels Erkennen des Schutzintervalls eines OFDM-Symbols. Das Schutzintervall eines OFDM-Symbols hat die Aufgabe, Mehrwegeausbreitung zu kompensieren, da bei einer Funkübertragung Signale über verschiedene Wege, die unterschiedlich lang sind, vom Sender zum Empfänger gelangen können. Dies liegt daran, dass die Funksignale durch Reflexionen an Gebäuden, Bergen und Pflanzen unterschiedliche Wege vom Sender zum Empfänger nehmen. Das Schutzintervall sollte so lang gewählt sein, dass eine Überlagerung von aufeinanderfolgenden Symbolen aufgrund der Mehrwegeausbreitung ausbleibt. Das Schutzintervall bietet demnach eine Art Puffer, um eine Überlagerung von Nutzinformationen zu vermeiden.

Durch das Vorliegen einer Frequenzverschiebung zwischen Sender und Empfänger kann eine Frequenzablage existieren, die in zwei Anteile aufgeteilt werden kann. Zum einen einen Anteil, der ein ganzzahliges Vielfaches eines Trägerabstandes ist, und zum anderen einen Anteil, der den nicht ganzzahligen Rest bildet. Der ganzzahlige Anteil führt lediglich zur Verschiebung aller Träger am Ausgang des OFDM-Demodulators. Damit wird die Orthogonalität eines OFDM-Übertragungssystems nicht gestört. Der nicht ganzzahlige Anteil stört jedoch die Orthogonalität eines OFDM-Systems. Daher ist dieser nicht ganzzahlige Anteil zu schätzen, um die OFDM-Symbole um diesen nicht ganzzahligen Anteil zu korrigieren. Dies kann durch Auswertung der Phase der Autokorrelierten des Schutzintervalls geschehen. Die nachfolgende Gleichung beschreibt den mathematischen Zusammenhang zwischen der Phase $\varphi$ der Autokorrelierten und dem nicht ganzzahligen Anteil df der Frequenzablage.

$$\varphi = \arg\{\sum_{k=0}^{N_G-1} r(d_{opt} + k + N_{PD}) \cdot r^*(d_{opt} + k)\} = 2\pi \; df \; \cdot T_U$$

mit $d_{opt}$ = Startposition des OFDM-Signals
$N_{PD}$ = DFT-Länge
$N_G$ = Länge des Guard-Intervalls in Abtastwerten
$T_U$ = nutzbare Symboldauer

DFT bedeutet diskrete Fouriertransformation, wobei die FFT eine DFT ist, die nach einem effizienten Algorithmus abläuft.

Dann wird der nicht ganzzahlige Anteil df für alle Abtastwerte des Empfangssignals kompensiert. Dies wird dann in Block 8 vorgenommen. Im Block 9 wird dann die OFDM-Demodulation vorgenommen. Am Ausgang der OFDM-Demodulation liegen nun die demodulierten OFDM-Symbole vor. Nun wird in Block 10 die Sequenz aus dem Piloten extrahiert. Da nun aber nicht bekannt ist, welches OFDM-Symbol das erste OFDM-Symbol ist, probiert der Empfänger die Sequenz aus verschiedenen OFDM-Symbolen zu extrahieren, um die extrahierte Sequenz dann mit einer abgespeicherten Sequenz, die genau der gesendeten Sequenz entspricht, zu vergleichen. Im Block 10 werden auch in einem OFDM-Symbol verschiedene Probierpositionen für die Pilotenextraktion verwendet, da die erste, grobe Zeitsynchronisation mit dem Schutzintervall nicht notwendigerweise genau zur Synchronisation mit dem OFDM-Symbol-Anfang führt. Neben der Synchronisation mit dem Schutzintervall sind auch andere Synchronisationsalgorithmen möglich.

Der Empfänger führt dabei in Block 10 eine differenzielle Demodulation durch, um die Sequenz zu extrahieren. Durch Verwendung der Kreuzkorrelation für den Vergleich der extrahierten Sequenz und der abgespeicherten Sequenz wird ein Korrelationsgütemaß A bestimmt, das maximal wird, wenn die demodulierte Sequenz identisch zur abgespeicherten Sequenz ist. Dasjenige OFDM-Symbol, für welches das Maximum des Korrelationsgütemaßes A berechnet wurde, ist das erste OFDM-Symbol eines Rahmens. Damit ist dann die Rahmensynchronisation erreicht. Die Probierposition, für die dieses Maximum berechnet wurde, gibt die ganzzahlige Frequenzablage an.

Mathematisch lässt sich die Rahmen- und Frequenzsynchronisation wie folgt beschreiben. Es sei s eine noch zu definierende Sequenz mit guten Korrelationseigenschaften:

$$s = \left[s(0),..., s(i),...., s(N_P - 1)\right]$$

Durch Verschiebung der Auswertefenster wird die demodulierte Sequenz r für jedes empfangene OFDM-Symbol und für jede Probierposition g aus den empfangenen Subträgersymbolen X berechnet.

$$r_{k,g} = \left[(X_{k,f(0)+g} \cdot X^*_{k,f(0)+1+g}),..., (X_{k,f(i)+g} \cdot X^*_{k,f(i)+1+g}),...., (X_{k,f(N_P-1)+g} \cdot X^*_{k,f(N_P-1)+1+g})\right]$$

mit
$k$ : Nummer des OFDM-Symbols im Rahmen (k=1..15)
$g$ : Probierposition

*i*            : Index der Pilotenpaare (i=0..$N_p$-1)

$N_p$         : Anzahl der Pilotenpaare

*f(i), f(i)+1*         : Subträgerindex des Pilotenpaares (Frequenz)

$X_{k,i}$        : Subträgersymbol (Zeitindex k, Frequenzindex i)

Jedes einzelne Element der Sequenz r wird durch differenzielle Demodulation eines Pilotenpaares ermittelt.

Für jede demodulierte Sequenz r wird die zyklische Kreuzkorrelation mit der dem Empfänger bekannten Sequenz s berechnet.

Es gilt:

$$\widetilde{\varphi}_{sr}(m) = \sum_{n=0}^{N_p-1} s^*(n) \cdot r_{k,g}[(n+m) \bmod N_P] \quad (1)$$

Nimmt man ideale Übertragungsbedingungen an, dann entspricht die letzte Gleichung (1) der zyklischen Autokorrelation der Sequenz s, wenn sich alle Pilotenpaare im Auswertefenster der Rahmen und Frequenzsynchronisation befinden.

Zur Beurteilung der Korrelationsergebnisse lassen sich verschiedene Kreuzkorrelationsgütemaße definieren, wie z.B. den Meritfaktor (MF), der das Verhältnis der Energie des Hauptwertes der zyklischen Kreuzkorrelation zur gesamten in den Nebenwerten enthaltenen Energie angibt:

$$\Lambda_g(k) = MF = \frac{|\widetilde{\varphi}_{sr_{k,g}}(0)|^2}{\sum_{m=1}^{N_p-1} |\widetilde{\varphi}_{sr_{k,g}}(m)|^2} \quad (2)$$

Dieses Korrelationsgütemaß ist für jede nach Gleichung (1) ermittelte Korrelationsfolge zu ermitteln. Aus Gleichung (2) wird ersichtlich, dass der Metrikwert dann maximal wird, wenn die Sequenz r der Sequenz s am ähnlichsten ist. In diesem Fall ist die im Hauptwert der zyklischen Kreuzkorrelation enthaltene Energie maximal und die in den Nebenwerten enthaltene Energie minimal.

Ein weiteres Korrelationsgütemaß neben dem Meritfaktor ist das Verhältnis der Kreuzkorrelationshauptmaximums zum betragsgrößten Nebenmaximum. Untersuchungen zeigen jedoch, dass bei den zu erwartenden rauschförmigen Störungen der Meritfaktor das geeignete Korrelationsgütemaß ist.

Bei der Wahl der Korrelationssequenz s ist folgendes zu beachten: Prinzipiell können für jede Länge der Sequenz Folgen mit perfekten Autokorrelationseigenschaften gefunden werden, mit anderen Worten, die Anzahl der Pilotenpaare ist ein wählbarer Parameter. Aufgrund von Mehrwegeausbreitung sind die einzelnen OFDM-Symbole am Empfänger stark gestört. Da während der Synchronisationsphase jedoch noch keine Kanalschätzung vorliegt, muß die Korrelationssequenz r am Empfänger durch differenzielle Demodulationen aus den einzelnen Subträgersymbolpaaren ermittelt werden. Um eine große Robustheit gegenüber Rauschstörungen zu erreichen, sollte die Anzahl der Phasenzustände der Korrelationssequenz s möglichst gering sein. Daher wird die binäre Phasenumtastung oder die Quadraturphasenumtastung, die zum einen zwei und zum anderen vier Phasenzustände aufweisen, verwendet. Als Ausgangswerte des Blocks 10 liegen dann die Rahmensynchronisation 11 und die ganzzahlige Frequenzablage 12 vor.

In Figur 2 ist ein Blockschaltbild des Gesamtübertraungssystems unter Verwendung des erfindungsgemäßen Verfahrens dargestellt. Es liegen die Datenquellen 13, eine Audiocodierung 15, übrige Daten und Steuerdaten 19 vor. Diese Datenquellen 13, 15 und 19 führen jeweils an eine Kanalcodierung 14, 16 und 20. Nach der Kanalcodierung 14 bzw. 16 folgt jeweils eine Umsortierung der Daten in der Zeit in den Blöcken 17 und 18, die als Timeinterleaving bekannt ist. Das Umsortieren der Daten nach der Zeit hat den Vorteil, das benachbarte Daten, zum Beispiel Sprachdaten, durch einen störenden Burst nicht komplett gestört werden, da sie nach dem Timeinterleaving zeitlich voneinander weiter entfernt sind. Durch Fehlerkorrekturmaßnahmen kann dann die Auswirkung dieses Bursts leichter empfangsseitig korrigiert werden.

Die Ausgangsdaten der Timeinterleaver 17, 18 und der Kanalcodierung 20 werden im Block 21 in einem Multiplex zusammengefasst. Im Block 22 werden die Daten auf verschiedene Träger verteilt, hier liegt also eine OFDM-Modulation vor. Im Block 23 werden die OFDM-Signale in den Zeitbereich transformiert, wobei die Piloten in Block 24 den OFDM-Symbolen hinzugefügt werden. In Block 25 werden die OFDM-Signale in analoge Signale zur Übertragung mittels eines Digital/Analog-Wandlers 25 umgewandelt. Der nachfolgende Hochfrequenzsender 26 mit Antenne versendet die analogen Signale über den Funkkanal 27.

Ein Hochfrequenzempfänger 28 empfängt, die über den Funkkanal 27 übertragenen OFDM-Signale. Der Hochfrequenz-Empfänger 28 übergibt die empfangenen OFDM-Signale einem Analog/Digital-Wandler 29, der die empfangenen OFDM-Signale in digitale Signale umwandelt. Im Block 30 wird eine OFDM-Demodulation vorgenommen, wobei vorher in Block 31 eine grobe Zeitsynchronisation wie oben dargestellt durchgeführt wird. Die demodulierten Signale werden dann an einen Block 32 zur Dekodierung der Steuerinformationen und/oder an einen Block 33 zum sog. Deinterleaving, also zur Umkehrung der Umsortierung der Daten in der Zeit, so dass sie nun wieder in der richtigen zeitlichen Reihenfolge vorliegen, und zur Programmauswahl versendet. Im Block 34 wird eine Kanaldekodierung durchgeführt, während in Block 35 eine Dekodierung der Audiodaten oder anderen Daten durchgeführt wird.

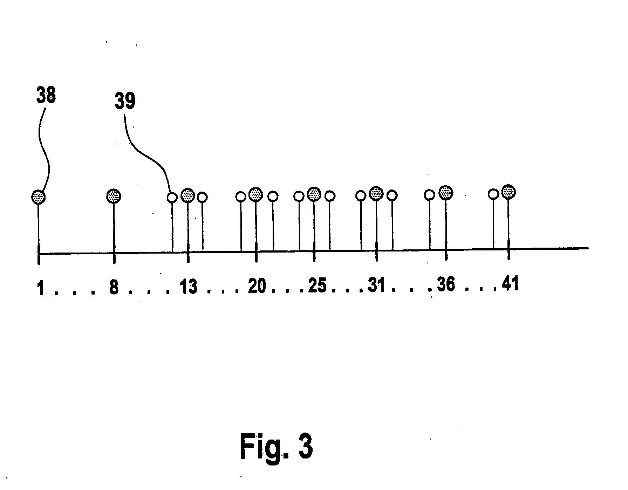

In Figur 3 ist eine Anordnung der Piloten im ersten OFDM-Symbol eines Rahmens dargestellt. Die Zahlen in horizontaler Richtung bedeuten die unterschiedlichen Träger eines OFDM-Symbols. Mit den Symbolen 38 sind Piloten dargestellt, die bereits für die Kanalschätzung vorgesehen wurden. Mittels des Symbols 39 sind die Piloten dargestellt, die erfindungsgemäß dem ersten Symbol hinzugefügt werden, um Pilotenpaare oder gar Pilotentripel zu erzeugen. Diese zusätzlichen Piloten werden hier auch zur Verbesserung der Kanalschätzung verwendet, die für die kohärente Demodulation notwendig ist.

Die Anordnung der Pilotenpaare ist zunächst beliebig, wobei eine große Anzahl von Pilotenpaaren, auf die die Sequenz aufmoduliert wird, zu besseren Rahmensynchronisationen führt als eine geringere Anzahl von Pilotenpaaren. Zwischen den Piloten befinden sich Nutzinformationen, die auch im ersten Symbol, das zur Rahmensynchronisation verwendet wird, übertragen werden. Für unterschiedliche bekannte Sequenzen mit sehr guten Korrelationseigenschaften wie CAZAC-Folgen, Milewski-Folgen, Frank-Folgen, Lemple-Folgen, Differenzmengenfolgen und Quadratic-Residue-Folgen sind unterschiedliche Meritfaktoren A berechnet worden, wobei es sich gezeigt hat, dass für Sequenzen mit Sequenzlängen von 10, 14 und 18 mit wenig Phasenzuständen kein guter Meritfaktor berechnet werden konnte. Allerdings weist eine Sequenz mit 16 Pilotenpaaren, eine Frankfolge, einen besonders hohen Meritfaktor auf und ist daher besonders robust. Dabei wurden vier Phasenzustände, also QPSK, verwendet.

Durch eine Mittelung über Gruppen von OFDM-Symbolen, wobei die Gruppen von OFDM-Symbolen Teile eines Rahmens sein können, kann die Leistungsfähigkeit des Synchronisationsverfahrens weiter erhöht werden. Dies liegt daran, dass sich einzelne Fehler durch eine Mittelung ausgleichen können.

Im DRM GROUND Mode, der im Mittelwellenbereich bzw. Langwellenbereich eingesetzt wird, werden die zusätzlichen Piloten, um die Pilotenpaare zu bilden, nach folgender Tabelle 1 bei den entsprechenden Trägerindices, bestimmte Frequenzen, und Phasen der Zusatzträger angeordnet:

Tabelle 1:

| Trägerindices der zusätzlichen Piloten und die Phasen der Zusatzträger im DRM GROUND Mode | |
|---|---|
| **Trägerindices** | **Phasen der Zusatzträger** |
| 17 | 270° |
| 19 | 180° |
| 21 | 0° |
| 28 | 0° |
| 29 | 0° |
| 32 | 180° |
| 33 | 0° |
| 39 | 90° |
| 40 | 180° |
| 41 | 180° |
| 53 | 90° |
| 55 | 0° |
| 56 | 0° |
| 60 | 0° |
| 61 | 0° |

Tabelle 1: (fortgesetzt)

| Trägerindices der zusätzlichen Piloten und die Phasen der Zusatzträger im DRM GROUND Mode | |
| --- | --- |
| **Trägerindices** | **Phasen der Zusatzträger** |
| 63 | 270° |
| 71 | 0° |
| 73 | 180° |

In der folgenden Tabelle 2 sind die Trägerindices und die Phasen der zusätzlichen Träger für die hinzuzufügenden Piloten für den DRM SKY Mode gezeigt. Der DRM SKY Mode ist für den Kurzwellenbereich gedacht.

Tabelle 2:

| Trägerindices der zusätzlichen Piloten und die Phasen der neuen Träger im DRM SKY Mode | |
| --- | --- |
| **Trägerindices** | **Phasen der Zusatzträger** |
| 14 | 90° |
| 18 | 180° |
| 20 | 0° |
| 24 | 0° |
| 26 | 180° |
| 32 | 90° |
| 36 | 0° |
| 42 | 180° |
| 44 | 270° |
| 50 | 0° |
| 54 | 0° |
| 56 | 0° |
| 62 | 270° |
| 66 | 0° |
| 68 | 180° |

**Patentansprüche**

1. Verfahren zur Synchronisation von OFDM-Symbolen bei Rundfunkübertragungen, wobei die OFDM-Symbole in Rahmen übertragen werden, wobei die OFDM-Symbole Nutzdaten,erste Piloten (38) und Schutzintervalle aufweisen, **dadurch gekennzeichnet, dass** sendeseitig einem ersten OFDM-Symbol eines Rahmens zusätzliche Piloten (39) neben den Nutzdaten, ersten Piloten (38) und Schutzintervallen an vorgegebenen Stellen hinzugefügt werden, so dass sich Pilotenpaare aus den ersten und den zusätzliche Piloten (38, 39) bilden, dass sendeseitig den Pilotenpaaren eine Sequenz aufmoduliert wird, dass für die empfangenen OFDM-Symbole Pilotenpaare demoduliert werden, um die Sequenz zu extrahieren (10), dass empfangsseitig die extrahierte Sequenz und eine abgespeicherte Sequenz verglichen werden, indem ein Maß für jedes OFDM-Symbol erzeugt wird, und dass das OFDM-Symbol mit dem größten Maß als das erste OFDM-Symbol eines Rahmens erkannt wird.

2. Verfahren nach Anspruch 1, **dadurch gekennzeichnet, dass** die Sequenz dem Piloten (38, 39) mittels einer differenziellen Modulation aufmoduliert wird.

3. Verfahren nach Anspruch 2, **dadurch gekennzeichnet, dass** als differenzielle Modulation Quadraturphasenumtastung oder binäre Phasenumtastung verwendet wird.

4. Verfahren nach einem der vorhergehenden Ansprüche, **dadurch gekennzeichnet, dass** empfangsseitig anhand der Schutzintervalle der OFDM-Symbole eine Symbolsynchronisation und eine Bestimmung einer nicht ganzzahligen Frequenzablage durchgeführt werden und dass die empfangenen OFDM-Symbole um die nicht ganzzahlige Frequenzablage korrigiert werden.

5. Verfahren nach Anspruch 4, **dadurch gekennzeichnet, dass** die Symbolsynchronisation mittels Korrelation erreicht wird.

6. Verfahren nach Anspruch 4 oder 5, **dadurch gekennzeichnet, dass** die nicht ganzzahlige Frequenzablage anhand der Phase der Autokorrelierten des Schutzintervalls bestimmt wird.

7. Verfahren nach einem der vorhergehenden Ansprüche, **dadurch gekennzeichnet, dass** die extrahierte und die abgespeicherte Sequenz mittels Kreuzkorrelation verglichen werden.

8. Verfahren nach einem der vorhergehenden Ansprüche, **dadurch gekennzeichnet, dass** mittels des Maßes eine ganzzahlige Frequenzablage bestimmt wird.

9. Verfahren nach einem der vorhergehenden Ansprüche, **dadurch gekennzeichnet, dass** die Rahmensynchronisation über Gruppen von OFDM-Symbolen durch Mittelung der Rahmensynchronisationsergebnisse der Gruppen von OFDM-Symbolen durchgeführt wird.

10. Verfahren nach einem der vorhergehenden Ansprüche, **dadurch gekennzeichnet, dass** im DRM GROUND Mode als die Trägerindices für die zusätzlichen Piloten (39) die Trägerindices 17, 19, 21, 28, 29, 32, 33, 39, 40, 41, 53, 55, 56, 60, 61, 63, 71 sowie 73 und als die für diese Trägerindices jeweils zugehörigen Phasen 270°, 180°, 0°, 0°, 0°, 180°, 0°, 90°, 180°, 180°, 90°, 0°, 0°, 0°, 0°, 270°, 0° und 180° verwendet werden.

11. Verfahren nach einem der vorhergehenden Ansprüche, **dadurch gekennzeichnet, dass** im DRM SKY Mode als die Trägerindices für die zusätzlichen Piloten (39) die Trägerindices 14, 18, 20, 24, 26, 32, 36, 42, 44, 50, 54, 56, 62, 66 und 68 und als die zu diesen Trägerindices jeweils zugehörigen Phasen 90°, 180°, 0°, 0°, 180°, 90°, 0°, 180°, 270°, 0°, 0°, 270°, 0° und 180° verwendet werden.

12. Rundfunksender und Rundfunkempfänger zur Durchführung des Verfahrens nach einem der Ansprüche 1 bis 11.

**Claims**

1. Method for synchronization of OFDM symbols for broadcast radio transmissions, with the OFDM symbols being transmitted in frames, and with the OFDM symbols having user data, first pilots (38) and guard intervals, **characterized in that**, at the transmission end, additional pilots (39), in addition to the user data, first pilots (38) and guard intervals, are added to a first OFDM symbol of a frame at predetermined locations, so that pilot pairs are formed from the first pilots(38) and the additional pilots (39), **in that**, at the transmission end, a sequence is modulated onto the pilot pairs, **in that** pilot pairs are demodulated for the received OFDM symbols in order to extract (10) the sequence, **in that**, at the receiving end, the extracted sequence and a stored sequence are compared by producing a measure for each OFDM symbol, and **in that** the OFDM symbol having the largest measure is identified as the first OFDM symbol in a frame.

2. Method according to Claim 1, **characterized in that** the sequence is modulated onto the pilot (38, 39) by means of differential modulation.

3. Method according to Claim 2, **characterized in that** quadrature phase shift keying or binary phase shift keying is used as the differential modulation.

4. Method according to one of the preceding claims, **characterized in that**, at the receiving end, symbol synchronization and determination of a non-integer frequency offset are carried out on the basis of the guard intervals of the OFDM symbols, and **in that** the received OFDM symbols are corrected by the non-integer frequency offset.

5. Method according to Claim 4, **characterized in that** the symbol synchronization is achieved by means of correlation.

6. Method according to Claim 4 or 5, **characterized in that** the non-integer frequency offset is determined on the basis of the phase of the autocorrelations of the guard interval.

7. Method according to one of the preceding claims, **characterized in that** the extracted sequence and the stored sequence are compared by means of cross-correlation.

8. Method according to one of the preceding claims, **characterized in that** an integer frequency offset is determined by means of the measure.

9. Method according to one of the preceding claims, **characterized in that** the frame synchronization is carried out via groups of OFDM symbols by averaging the frame synchronization results of the groups of OFDM symbols.

10. Method according to one of the preceding claims, **characterized in that**, in the DRM GROUND mode, the carrier indices 17, 19, 21, 28, 29, 32, 33, 39, 40, 41, 53, 55, 56, 60, 61, 63, 71 as well as 73 are used as the carrier indices for the additional pilots (39), and 270°, 180°, 0°, 0°, 0°, 180°, 0°, 90°, 180°, 180°, 90°, 0°, 0°, 0°, 0°, 270°, 0° and 180° are used as the phases which are respectively associated with these carrier indices.

11. Method according to one of the preceding claims, **characterized in that**, in the DRM SKY mode, the carrier indices 14, 18, 20, 24, 26, 32, 36, 42, 44, 50, 54, 56, 62, 66 and 68 are used as the carrier indices for the additional pilots (39), and 90°, 180°, 0°, 0°, 180°, 90°, 0°, 180°, 270°, 0°, 0°, 270°, 0° and 180° are used as the phases which are respectively associated with these carrier indices.

12. Broadcast radio transmitter and broadcast radio receiver for carrying out the method according to one of Claims 1 to 11.


**Revendications**

1. Procédé de synchronisation de symboles OFDM pour les transmissions radio, consistant à transmettre des symboles OFDM dans des trames, ces symboles OFDM contenant des données utiles, des premiers pilotes (38) et des intervalles de protection,
   **caractérisé en ce que**
   du côté de l'émission, on ajoute à un premier symbole OFDM d'une trame, des pilotes supplémentaires (39) à côté des données utiles, un premier pilote (38) et des intervalles de protection à des endroits prédéterminés pour former des paires pilotes comprenant le premier et les pilotes supplémentaires (38, 39),
   du côté de l'émission, on module une séquence sur les paires pilotes,
   pour les symboles OFDM reçus on démodule les paires pilotes pour en extraire la séquence,
   du côté de la réception on compare la séquence extraite et une séquence en mémoire et on génère une mesure pour chaque symbole OFDM et on reconnaît le symbole OFDM ayant la plus grande mesure comme premier symbole OFDM d'une trame.

2. Procédé selon la revendication 1,
   **caractérisé en ce qu'**
   on module la séquence sur le pilote (38, 39) par une modulation différentielle.

3. Procédé selon la revendication 2,
   **caractérisé en ce que**
   la modulation différentielle est une transformation de phases en quadrature ou une transformation de phase binaire.

4. Procédé selon l'une quelconque des revendications précédentes,
   **caractérisé en ce que**
   du côté de l'entrée, à l'aide des intervalles de protection des symboles OFDM on effectue une synchronisation de symboles et une détermination d'une dérive de fréquence correspondant à un nombre non entier et on corrige les symboles OFDM reçus suivant la dérive de fréquence centrale ne correspondant pas un nombre entier.

5. Procédé selon la revendication 4,
   **caractérisé en ce qu'**
   on effectue la synchronisation des symboles par corrélation.

6.  Procédé selon l'une quelconque des revendications 4 ou 5,
    **caractérisé en ce qu'**
    on détermine la dérive centrale de fréquence non entière avec la phase de l'intervalle de protection en autocorrélation.

7.  Procédé selon l'une quelconque des revendications précédentes,
    **caractérisé en ce qu'**
    on compare la séquence extraite et la séquence enregistrée en procédant par corrélation croisée.

8.  Procédé selon l'une quelconque des revendications précédentes,
    **caractérisé en ce qu'**
    on détermine une dérive centrale de fréquence de nombre entier par la mesure.

9.  Procédé selon l'une quelconque des revendications précédentes,
    **caractérisé en ce qu'**
    on effectue la synchronisation de trame par des groupes de symboles OFDM en faisant la moyenne des résultats de synchronisation de trame des groupes de symboles OFDM.

10. Procédé selon l'une quelconque des revendications précédentes,
    **caractérisé en ce qu'**
    en mode DRM GRD, comme indices de porteuses pour les pilotes supplémentaires (39) on utilise les indices de porteuses 17, 19, 21, 28,29, 32, 33, 39, 40, 41, 53, 55, 56, 60, 61, 63, 71, 73 et pour ces indices de porteuses on utilise les phases correspondantes 270°, 180°, 0°, 0°, °0°, 180°, 0°, 90°, 180°, 180°, 90°, 0°, 0°, 0°, 0°, 270°, 180°.

11. Procédé selon l'une quelconque des revendications précédentes,
    **caractérisé en ce qu'**
    en mode DRM SKY, comme indices de porteuses pour les pilotes supplémentaires (39) on utilise les indices de porteuses 14, 18, 20, 24, 26, 32, 36, 42, 44, 50, 54, 56, 62, 66, 68 et pour ces indices on utilise les phases correspondantes 90°, 180°, 0°, 0°, 180°, 90°, 0°, 180°, 270°, 0°, 0°, 270°, 0°, 180°.

12. Emetteur radiophonique et récepteur radiophonique pour la mise en oeuvre du procédé selon l'une quelconque des revendications 1 à 11.

## Fig. 1

## Fig. 2

**Fig. 3**